# EUROPEAN PATENT APPLICATION

(11) **EP 1 308 831 A1**
(43) Date of publication of application: **07.05.2003**
(21) Application number: 01309196.2
(22) Date of filing: 30.10.2001
(51) Int. Cl.: G06F 3/033, H04M 1/247, G06F 3/16

(54) **Display system**

(71) Applicant: TELEFONAKTIEBOLAGET L M ERICSSON (publ), 126 25 Stockholm (SE)
(72) Inventor: Björkengren, Ulf, 23734 Bjärred (SE)
(74) Representative: O'Connell, David Christopher

(57) **Abstract**

A display screen, for example a touch-sensitive screen, provides a first type of audible output when a region of the display screen is indicated for possible input, and a second type of audible output when an input is made at a region of the display screen.

The display screen may be provided in a communications device such as a mobile phone, with different regions of the screen representing the numeric keys of the phone. Without looking at the screen, the user can then use the audible output indicating that he is touching a region representing a key, to determine the position of his finger on the screen.

## Description

### TECHNICAL FIELD OF THE INVENTION

This invention relates to a display system, and in particular to a display system which is used as part of an input device. More specifically, the display system is primarily intended for use in an input device, in which a user selects an item from a number of items shown on a display.

### BACKGROUND OF THE INVENTION

Touch-sensitive display screens are known, for example from US-5,815,142. In such devices, information can be presented to a user on a display screen, such as a liquid crystal display screen. The user can then select one of the displayed items by touching the relevant area of the screen. This document also discloses that, when one of the displayed items has been selected, for example by touching the relevant area of the screen for a sufficiently long time, an audible output is provided as confirmation.

Other touch-sensitive computer input devices are known, for example from US-5,767,457, which discloses a computer system with a display, and a separate touch-sensitive input device. In this system, a cursor may be moved around the display by moving a stylus on a touch-sensitive screen, and an input can be made by tapping the stylus on the screen. Again, this document discloses that, when an input is made, an audible output is provided as confirmation.

### SUMMARY OF THE INVENTION

A further problem, which arises with many input devices, is that it is not always clear to the user when a cursor, or a stylus, or other input pointer, is correctly positioned over an input region of a display screen.

According to the present invention, there is provided an input device, including a display screen, which is adapted to provide a first type of audible output when a region of the display screen is indicated for possible input, and a second type of audible output when an input is made at a region of the display screen.

In a preferred embodiment of the invention, the input device is a touch-sensitive screen, and different regions of the screen can represent different available inputs. For example, the input device may be used in a mobile communications device such as a mobile phone, and the touch-sensitive screen can be used a keypad, with different regions of the screen representing the numeric and other keys on the keypad.

When the input device is a touch-sensitive screen, the first type of audible output can be provided in response to a detected movement in a region of the display screen, and the second type of audible output can be provided in response to removal of a touch from within a region of the display screen, when an input is made.

An alternative possibility is that the first type of audible output could be provided in response to a light touch on the display screen, while the second type of audible output could be provided only in response to a second touch which meets specific criteria intended to avoid the possibility of inadvertent activation. For example, the force and/or duration of the second touch may have to be within predetermined limits.

In this way, the touch-sensitive screen and the audible feedback can be used to provide the user with the same feedback which he would normally receive when using a conventional keypad. That is, the user can use the audible feedback to determine when his finger is on a specific key of a touch-sensitive keypad, in the same way that a user can use his sense of touch to determine when his finger is on a specific key of a conventional keypad.

In order to increase the usefulness of the audible feedback, the first audible output can in some or all cases indicate which key has been touched.

There is therefore provided an input device, which allows a user to dial a number on a mobile phone having the numeric keys provided on a touch-sensitive screen, without needing to look carefully at the screen.

In alternative embodiments of the invention, the input device may include a screen, and a separate touch-sensitive pad with a pointer such as a stylus. Movements of the stylus on the touch-sensitive pad can then be used to select areas on the screen, and to make inputs in selected areas. Again, in accordance with the invention, the first sound can be provided as an audible output when the cursor indicates a particular region on the screen, while the second sound can be provided as an audible output when an input is registered at such a region.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF DRAWINGS

Figure 1 shows a mobile communications device in accordance with the invention.
Figure 2 is a block schematic diagram of the device of Figure 1.
Figure 3 is a flow chart showing an operating process of the device of Figure 1.

### DETAILED DESCRIPTION OF PREFERRED EMBODIMENTS

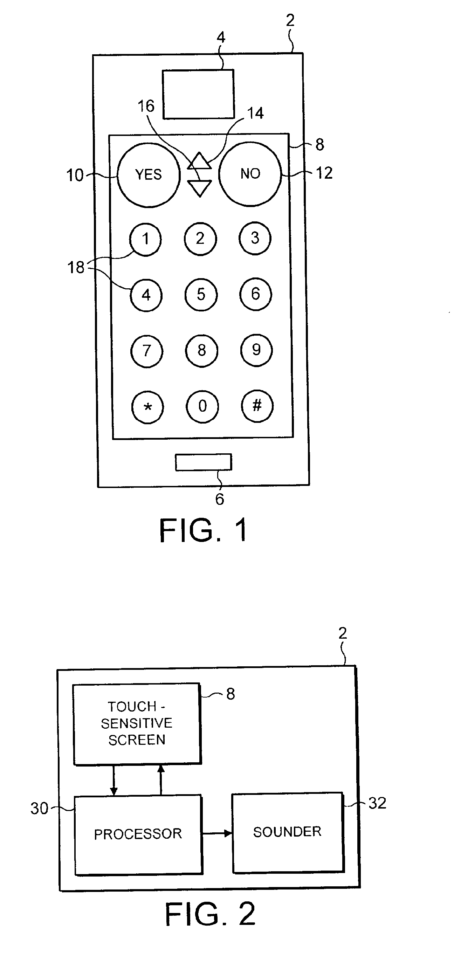

Figure 1 shows a mobile communications device in the form of a mobile phone 2, in accordance with an aspect of the present invention. The mobile communications device 2 has a loudspeaker outlet 4, a microphone inlet 6, and a touch-sensitive display screen 8.

The advantage of providing a touch-sensitive display screen is that the screen can be used to input dialled numbers, as well as access the other functions of the phone, avoiding the need to provide a keypad. This allows the phone 2 to be made significantly smaller, which is generally thought desirable by users of mobile phones.

Although the invention is described herein with reference to its use in a mobile phone, it is generally applicable to portable radio communication equipment or mobile radio terminals, such as mobile telephones, pagers, communicators, electronic organisers, smartphones, personal digital assistants (PDAs), or the like. Other embodiments of the invention are applicable to other systems such as palmtop, laptop or personal computer systems, which are provided with a display, and a device for selecting different areas of the display screen.

Figure 1 shows the status of the display on the touch-sensitive screen 8, at a time when the device is in a phone dialling mode. That is, the screen includes regions which generally correspond in terms of their size and position with the keys of a conventional mobile phone keypad. Specifically, the screen includes YES and NO regions 10, 12, up and down regions 14, 16 and regions 18 corresponding to the numeric keys 0-9 as well as the * and # keys of a conventional mobile phone keypad.

In other modes of the device, the display which corresponds to the keypad can be entirely replaced by an alternative display. For example, if the phone has internet access, the entire screen 8 can be used to display web pages or other internet content.

Figure 2 is a block schematic diagram of the mobile phone 2 shown in Figure 1. It will be appreciated that Figure 2 shows only those parts of the phone which are relevant to an understanding of the present invention. Other components and features of the phone may be generally conventional, and will not be described further herein. In particular, the following description relates only to the control of the device by means of the user interaction with the touch-sensitive display screen 8, without describing the way in which radio signals are transmitted and received.

The phone 2 operates under the general control of a controller 30. As mentioned above, the phone 2 has a touch-sensitive display screen 8. In a presently preferred embodiment, the touch-sensitive display screen 8 is a resistive analog touch-sensitive screen, which is located above a liquid crystal display. However, any type of touch-sensitive screen, and any type of display, may be used.

The controller is also connected to a sounder 32, which provides audible outputs to the user, as will be described in more detail below.

The information which is presented on the display can vary, depending on the operating mode of the device. For example, while the device is in a phone dialling mode, the entire screen can be used to present a large representation of a phone keypad. Alternatively, one part of the screen can be used to present a representation of a phone keypad, while another part of the screen presents a conventional phone display, for example including information about a dialled number.

When the phone is in a different operating mode, the information which is presented on the display can be something completely different. However, in any operating mode, the display can present the user with a list of available options, in the form of written descriptions of those options, icons representing the options, etc.

In any case, the user can select one of the available options by touching the relevant area on the screen in a specific way. For example, the screen may accept an input only when the screen is touched within the relevant area, and the touch is then removed.

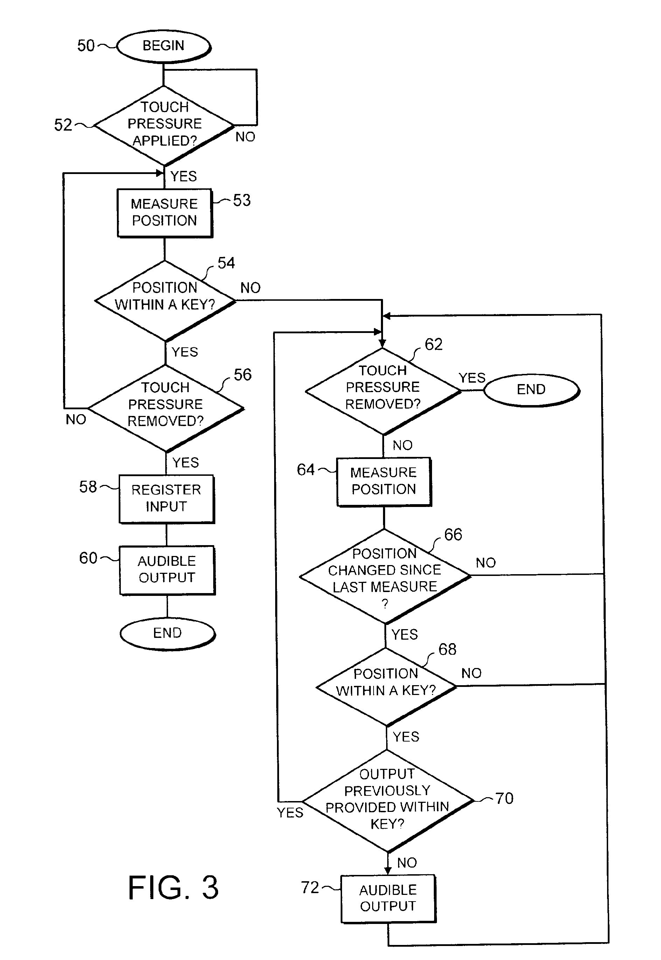

Figure 3 is a flow chart describing the operation of the controller 30, in conjunction with the touch-sensitive display screen 8, in order to provide audible feedback to the user. In this example, it will be assumed that the device is in the phone dialling mode described above, although the invention is applicable to any mode, and irrespective of the form of information displayed on the screen.

In step 50, the process begins when the screen is active and, in step 52, the screen detects whether the user has touched the screen. If no touch pressure has been applied, the process repeats step 52 until a touch is detected. If a touch pressure is detected, the position of the touch is detected in a conventional way in step 53 and, in step 54, it is determined whether the detected position of the touch is within one of the keys represented on the display. In practice, this can be achieved by detecting the location of the user's touch, and comparing this with the known locations of the areas which represent the keys, but the mechanism for doing this is known in itself.

If it is determined in step 54 that the touch is within one of the keys represented on the display, the process passes to step 56, and it is next determined whether the touch pressure has been removed.

If it is determined that the touch pressure remains, the process returns to step 53, and attempts to detect a new position of the touch. If it is determined in step 56 that the touch pressure has been removed, the process passes to step 58, in which the system registers an input on the key represented on the relevant area of the display, and to step 60, in which the controller causes the sounder 32 to produce an audible output, which indicates that the input has been registered. The procedure then ends.

If is determined in step 54 that the touch is not within one of the keys represented on the display, the process passes to step 62, in which it is determined whether the touch pressure has been removed.

If the touch pressure has been removed, that is, the user has simply touched the screen outside any of the keys, and then removed the touch, the process ends. No input is registered, and no output is provided.

If it is determined in step 62 that the touch pressure remains, the process passes to step 64, in which the position of the touch is again detected in a conventional way.

In step 66, it is then determined whether the detected position has changed since the last time the position was measured. If not, that is if the touch has remained in the same position, the process returns to step 62. However, if it is determined in step 66 that the position of the touch has changed since the last time it was detected, the process passes to step 68.

This situation can occur when the user is moving his finger or other implement around on the touch-sensitive screen, for example attempting to locate a particular key which he wishes to press. This may arise when the user is operating the phone in poor visibility conditions, or in a situation where he cannot pay close attention to the phone. It is therefore this situation in which, according to the present invention, it is recognised that it may be very useful to receive audible feedback about the position of the user's finger on the touch-sensitive screen.

In step 68, it is determined whether the detected position of the touch is within one of the keys represented on the screen. If it is not, the process returns to step 62. If the detected position of the touch is within one of the keys, the process passes to step 70.

In step 70, it is determined whether the key which the user is currently touching is a key which the user was touching immediately previously, and whether audible feedback has previously been provided from this key. If so, the procedure returns to step 62. Thus the system preferably only provides audible feedback when the touch is first sensed within a key, but audible feedback can be provided from several keys, if the touch position moves around the screen. If the touch position has just moved onto the key, that is, no audible feedback has previously been provided from this key, the procedure passes to step 72, in which an audible output is provided. As is conventional, the appearance of the key may also be altered (for example changed to white text on a black background instead of black text on a white background). The procedure then returns to step 62.

The audible output which is provided in step 72 to indicate that a key has been touched without registering an input, should be distinguishable from the audible output which would have been provided in step 60 to indicate that an input had been registered. For example, the tone provided in step 72 could be shorter in duration and/or quieter and/or at a different frequency from the tone provided in step 60.

The user will know, for example, that a numeric keypad of a phone has four rows of three keys each, and that the display of the present invention has the touch-sensitive regions arranged in the same pattern. Therefore, by moving his finger around the screen, the user will be able to determine the positions of the keys using the audible feedback alone, without needing to look at the screen. In order to make this operation more convenient, the audible output can provide additional cues.

For example, every key could provide a different sound. Specifically, different tones could be provided, or the output could be the numerical value of the key spoken in human language. Alternatively, the audible output corresponding to one of the keys (preferably the "5" key, since this is located centrally on the screen) can differ from the audible outputs corresponding to the other keys.

Although the invention has been described herein with reference to its use with a touch-sensitive display screen, it will be appreciated that it is also applicable to other input devices which use screens to display a list of user-selectable options.

For example, a device such as a computer, or a communications device, may be provided with a screen and a separate touch-sensitive pad. A cursor may be moved around a screen by means of a pointer, which may be a user's finger or may be a specially-provided stylus, moving on the touch-sensitive pad. The system can be put into a mode where the cursor is not necessarily visible, and instead there is a one-to-one relationship (with a scaling factor) between positions on the touch pad and the display. Then the method for indication becomes the same for both touch screen and touch pad. Again, two distinguishable types of audible output can be provided, one indicating that the pointer is in a user-selectable region, and the other indicating that a user input has been registered. This mode could be selected, or deselected, by for example three taps on the touch pad.

There is therefore provided a device, and a method of control therefor, which provide audible feedback to a user of a device with a touch-sensitive input system, allowing improved ease of use.

## Claims

1. An input system, including a display screen and a touch-sensitive input device, wherein the touch-sensitive input device is adapted to allow a region of the display screen to be indicated for possible input, and to allow an input to be made at a region of the display screen, and wherein the input system is adapted to provide a first type of audible output when a region of the display screen is indicated for possible input, and a second type of audible output when an input is made at a region of the display screen.

2. An input device as claimed in claim 1, wherein different regions of the screen can represent different available inputs.

3. An input device as claimed in claim 2, adapted to provide distinguishable audible outputs of the first type corresponding to different regions of the screen representing different available inputs.

4. An input device as claimed in claim 1, 2 or 3, wherein the touch-sensitive input device is a touch-sensitive screen which is integral with the display screen.

5. An input device as claimed in claim 1, 2 or 3, wherein the touch-sensitive input device comprises a touch-sensitive pad separate from the display screen, wherein movements of a pointer on the separate touch-sensitive pad are used to select regions on the display screen.

6. A method of operation of an input system, the system comprising a touch-sensitive input device and a display screen, the method comprising providing a first type of audible output when a region of the display screen is indicated for possible input, and a second type of audible output when an input is made at a region of the display screen.

7. A method as claimed in claim 6, comprising determining that a region of the display screen is indicated for possible input when a pointer moves within a corresponding region of the touch-sensitive input device.

8. A method as claimed in claim 6 or 7, comprising determining that an input is made at a region of the display screen when a touch is removed from a corresponding region of the touch-sensitive input device.

9. A mobile communications device, comprising a touch-sensitive display screen, comprising means for providing a first type of audible output when a region of the display screen is indicated for possible input, and a second type of audible output when an input is made at a region of the display screen.

10. A mobile communications device as claimed in claim 9, wherein, in one operating mode of the device, the display screen represents a keypad, with different regions of the screen representing different available inputs.

11. A mobile communications device as claimed in claim 10, wherein the display screen represents a numeric keypad, with different regions of the screen representing different numerical inputs.

12. A mobile communications device as claimed in claim 9, comprising means for distinguishing between a first touch on the screen, and a second touch on the screen, wherein only the second touch is used to generate an input to the device.

13. A mobile communications device as claimed in claim 12, wherein the means for distinguishing comprises means for determining that the touch has been removed from the screen.

14. A mobile communications device as claimed in any of claims 9 to 13, wherein the first type of audible output includes a plurality of distinguishable audible outputs corresponding to different regions of the screen.

15. A mobile communications device as claimed in claim 9, wherein, in one operating mode of the device, the display screen represents a numeric keypad, with different regions of the screen representing different numerical inputs, and wherein the first type of audible output includes a plurality of distinguishable audible outputs corresponding to different numerical inputs.

16. A mobile communications device as claimed in claim 15, wherein the plurality of distinguishable audible outputs comprises a first distinguishable audible output corresponding to the numeral "5", and a second distinguishable audible output corresponding to other numerical inputs.

17. A mobile communications device as claimed in claim 15, wherein the plurality of distinguishable audible outputs comprises audible outputs corresponding to the numerical inputs pronounced in human language.

18. A method of controlling a device with a touch-sensitive input screen, the method comprising providing a first mode of operation of the device, the method comprising, in the first mode of operation:
representing a keypad on the touch-sensitive input screen, such that specific regions of the screen correspond to specific keys of a keypad;
detecting a touch on the touch-sensitive input screen;
if it is detected that a touch moves in a region of the screen corresponding to a key, providing a first type of audible output; and
if it is detected that a touch is removed from a region of the screen corresponding to a key, providing a second type of audible output.
